# FASCICULE DE BREVET EUROPEEN

(11) **EP 1 737 698 B1**
(45) Date de publication et mention de la délivrance du brevet: **27.08.2008**
(21) Numéro de dépôt: 05746708.6
(22) Date de dépôt: 06.04.2005
(51) Int. Cl.: B60N 2/42, B60N 2/30

(54) **SIEGE ARRIERE DE VEHICULE AUTOMOBILE POURVU D'UNE CUVETTE ANTI-SOUSMARINAGE ESCAMOTABLE, ET VEHICULE CORRESPONDANT**
KRAFTFAHRZEUGRÜCKSITZ MIT EINEM EINZIEHBAREN ELEMENT ZUM VERHINDERN VON ABTAUCHEN UND ENTSPRECHENDES FAHRZEUG
MOTOR VEHICLE REAR SEAT COMPRISING A RETRACTABLE ANTI-SUBMARINING ELEMENT, AND CORRESPONDING VEHICLE

(30) Priorité: 15.04.2004 FR 0403940
(43) Date de publication de la demande: 03.01.2007
(73) Titulaire: Renault SAS, 92100 Boulogne Billancourt (FR)
(72) Inventeur: HEWAK, Gregor, F-95490 VAUREAL (FR)
(86) Numéro de dépôt international: PCT/FR2005/050211
(87) Numéro de publication internationale: WO 2005/102772

(56) Documents cités:
- EP-A- 0 459 839
- EP-A- 0 769 413
- EP-A- 0 808 744
- EP-A- 0 949 115
- EP-A- 1 256 488
- EP-A- 1 393 968
- DE-A- 3 913 529
- DE-A- 10 157 748
- DE-A- 10 229 599
- DE-C- 686 744
- FR-A- 2 535 657
- FR-A- 2 696 386
- FR-A- 2 738 535
- FR-A- 2 777 233
- GB-A- 656 932
- US-A- 4 475 763
- US-A- 4 512 609
- US-A- 5 913 570
- US-A- 6 030 038
- US-A1- 2002 053 826
- US-B1- 6 193 317
- US-B1- 6 371 559

## Description

L'invention concerne un siège arrière de véhicule automobile pourvu d'une cuvette anti-sousmarinage escamotable, et un véhicule pourvu d'un tel siège.

Les dispositifs anti-sousmarinage sont utilisés afin d'éviter que l'occupant du siège ne glisse sous la ceinture de sécurité lors d'une collision en raison d'un mauvais ajustement de la ceinture sous abdominale. Ces dispositifs sont placés sous l'assise du siège de manière à relever l'avant de l'assise.

Le document FR-2 777 233, qui montre les caractéristiques du préambule de la revendication 1, décrit un dispositif anti-sousmarinage escamotable permettant de dégager le plancher sous l'assise de manière à permettre au dossier de reposer sur le plancher sensiblement horizontalement lorsque l'assise est basculée vers l'avant. Le dispositif anti-sousmarinage décrit est formé d'une barre horizontale transversale en appui contre le dessous de l'assise en position d'utilisation. Cette barre transversale est solidaire en rotation de deux supports pivotants autour d'un même axe transversal solidaire du plancher. L'avant de l'assise est articulé au moyen de deux biellettes aux supports de sorte que le pivotement de l'assise vers l'avant provoque le basculement vers l'arrière de la barre anti-sousmarinage en direction du plancher jusqu'à ce qu'elle repose sur ce dernier. La faible épaisseur de la barre anti-sousmarinage permet au dossier du siège de reposer à plat sur le plancher de sorte qu'elle ne gêne pas l'abaissement du dossier. Le système d'escamotage décrit ne peut cependant pas être utilisé pour un dispositif anti-sousmarinage présentant un volume important, tel qu'une cuvette anti-sousmarinage, plus haute.

L'invention vise à pallier ces inconvénients en proposant un siège pourvu d'une cuvette anti-sousmarinage escamotable permettant ainsi de basculer le dossier du siège en avant vers le plancher sans être gêné par la cuvette anti-sousmarinage.

A cet effet, l'objet de l'invention concerne un siège arrière de véhicule automobile pourvu d'un dossier articulé, d'une assise dont l'extrémité avant est montée pivotante autour d'un axe d'articulation transversal sur un élément du plancher du véhicule de manière à pivoter vers l'avant entre une position d'utilisation et une position escamotée sensiblement verticale, et d'une cuvette anti-sousmarinage supportée par l'élément de plancher, caractérisé en ce qu'un bord transversal de la cuvette anti-sousmarinage est monté pivotant sur l'élément de plancher autour d'un axe d'articulation transversal situé à proximité et en arrière de l'axe d'articulation de l'assise, de manière à permettre le pivotement de la cuvette vers l'avant lorsque l'assise est en position escamotée, entre une position d'utilisation renversée située sous la position d'utilisation de l'assise, et une position escamotée dans laquelle la surface du plancher située sous la position d'utilisation de l'assise est suffisamment dégagée pour permettre au dossier du siège de reposer sur l'élément de plancher sensiblement horizontalement.

On peut éventuellement prévoir que le basculement de l'assise vers l'avant provoque simultanément le basculement de la cuvette vers l'avant.

Dans une variante, l'axe d'articulation de la cuvette pivote indépendamment de l'axe d'articulation de l'assise.

Dans une autre variante, l'axe d'articulation de l'assise est situé en avant et en dessous de l'axe d'articulation de la cuvette anti-sousmarinage de sorte que le pivotement de la cuvette anti-sousmarinage vers l'avant procure un large espace libre en avant de l'axe d'articulation. Un tel espace permet par exemple de loger une partie du dossier, par exemple l'appui tête, lorsque ce dernier est en position rabattue vers le plancher.

Dans un mode de réalisation, l'assise est articulée à l'élément de plancher au moyen d'au moins une biellette dont une extrémité est articulée à l'élément de plancher et l'autre extrémité est articulée à l'assise, la longueur de la biellette étant suffisante pour que la cuvette puisse pivoter jusqu'à sa position escamotée sans être gênée par l'assise escamotée.

De préférence, la biellette est montée de manière à s'étendre sensiblement parallèlement à la paroi de la cuvette reliée à l'élément de plancher, dans les positions escamotées de l'assise et de la cuvette.

Dans une variante, le bord de la cuvette est conformé de manière à s'adapter, dans la position d'utilisation, sur les bords d'un bac de rangement disposé sous l'assise du siège en position d'utilisation et formant l'élément de plancher.

L'invention concerne également un véhicule automobile pourvu d'un siège selon l'invention, dans lequel, dans une position pivotée du dossier, le dos du dossier s'étend sensiblement horizontalement dans le prolongement de la partie de plancher du véhicule située derrière ledit siège, le dossier reposant au moins partiellement sur l'élément de plancher.

Cet élément de plancher peut être soit le plancher lui-même, soit un élément rapporté du plancher : élément de support ou accessoire.

De préfèrence, l'élément de plancher est formé d'un bac de rangement situé sous la position d'utilisation de l'assise.

De préférence, la cuvette anti-sousmarinage est articulée sur un bord transversal avant dudit bac de manière à former, dans sa position d'utilisation, un couvercle pour celui-ci.

De préférence, le bac de rangement est pourvu de moyens de verrouillage de la cuvette anti-sousmarinage dans sa position d'utilisation.

L'invention est maintenant décrite en référence aux dessins annexés, non limitatifs, dans lesquels :
- la figure 1 est une représentation schématique en coupe d'un siège selon l'invention en position d'utilisation ;
- la figure 2 est une représentation similaire à celle de la figure 1, le siège étant en position escamotée ;
- les figures 3 et 4 sont des agrandissements de la partie avant de l'assise du siège dans les positions des figures 1 et 2 respectivement.

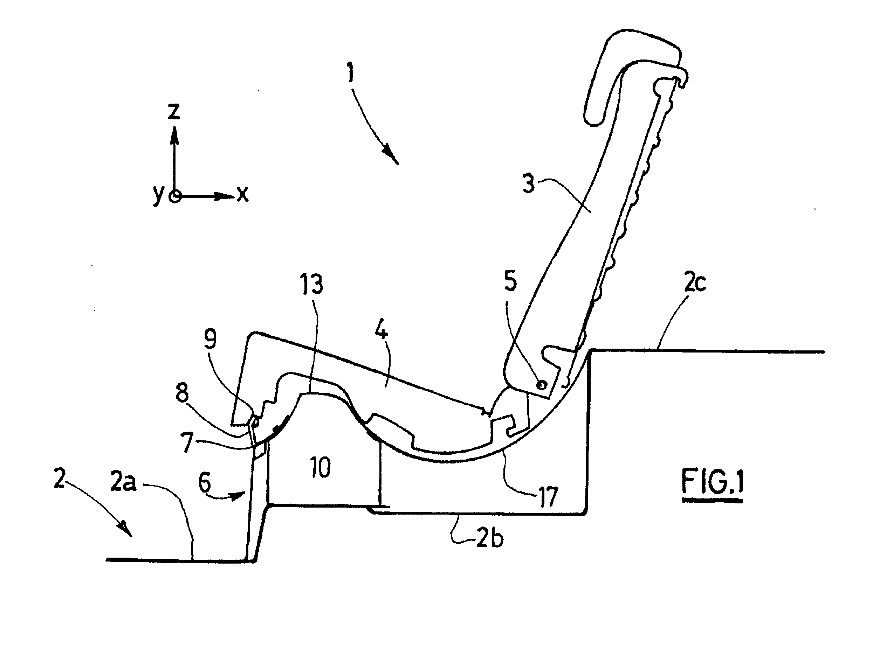

La figure 1 représente un siège arrière 1 selon l'invention reposant sur le plancher 2 d'un véhicule automobile. Le siège comprend un dossier 3 et une assise 4.

On définit par X, Y, Z, les directions longitudinale, transversale et verticale du véhicule, la direction X étant dirigée vers l'arrière du véhicule. On considère que ces directions correspondent aux directions longitudinale, transversale et verticale du siège. Les termes avant et arrière se réfèrent à l'avant et l'arrière du véhicule respectivement.

Le dossier 3 est articulé au plancher autour d'un axe horizontal transversal 5 de manière à basculer vers l'avant du véhicule. Cet axe de rotation 5 est relié au plancher, ou à un élément du plancher, d'une manière conventionnelle non représentée.

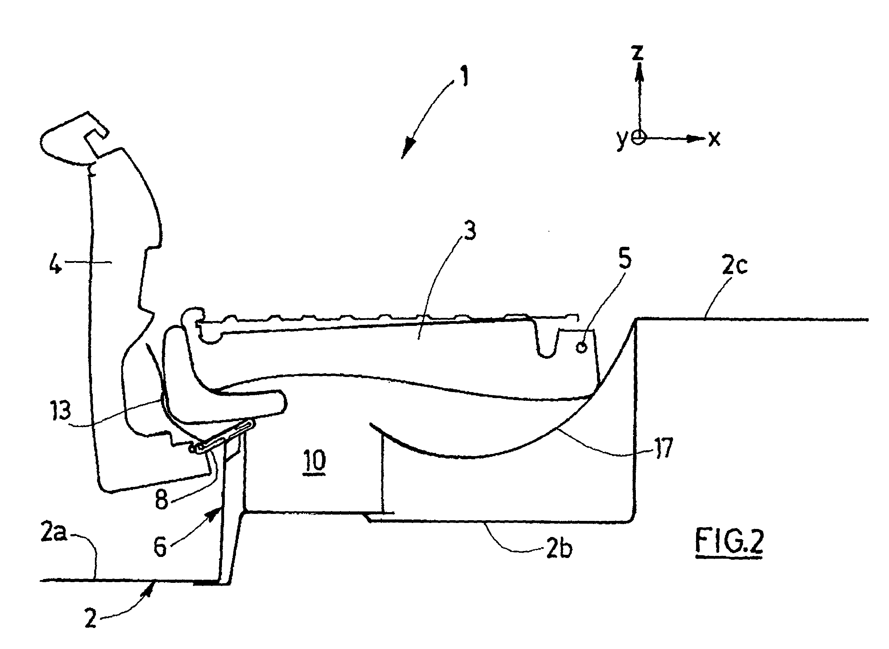

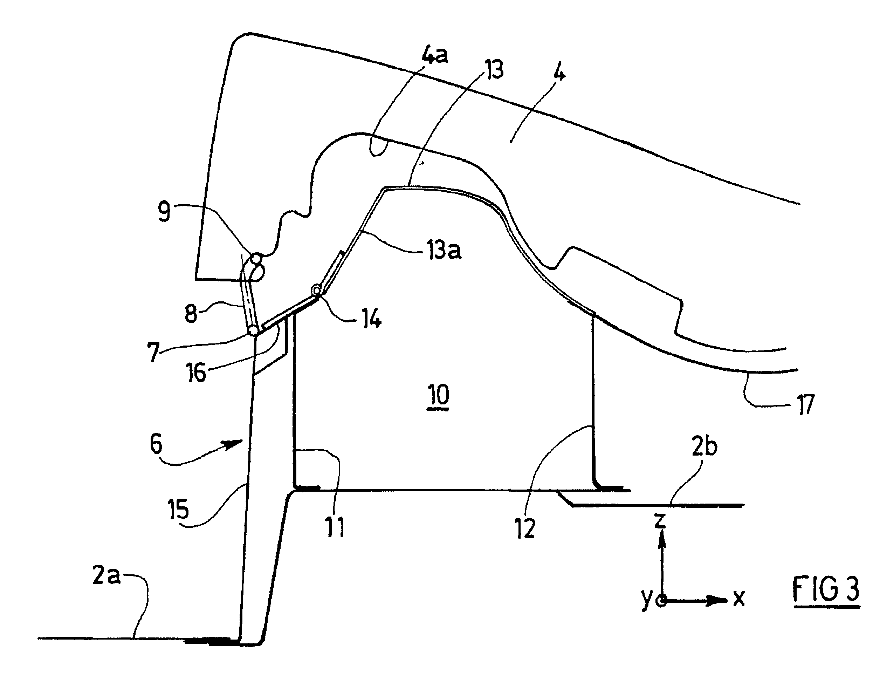

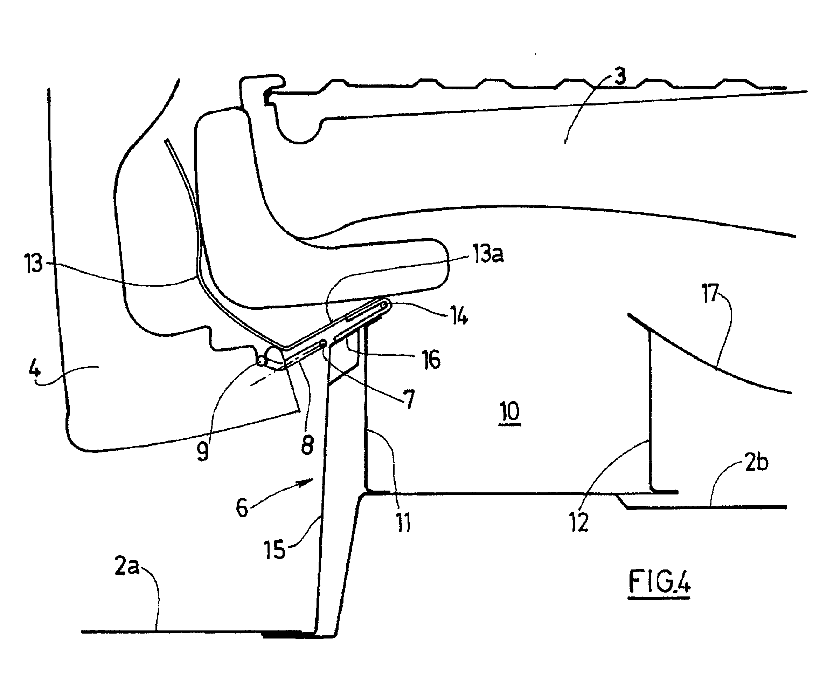

L'assise 4 est montée mobile entre une position d'utilisation (figures 1 et 3) et une position escamotée dans laquelle elle s'étend sensiblement verticalement en avant de sa position d'utilisation (figures 2 et 4).

A cet effet, l'extrémité avant de l'assise est montée pivotante sur un élément de plancher 6 autour d'un axe de rotation transversal horizontal 7 solidaire de l'élément 6. A cette fin, on utilise une biellette 8 (ou plusieurs biellettes) dont une extrémité est montée pivotante autour de cet axe de rotation transversal 7, et l'autre extrémité est montée pivotante autour d'un axe de rotation transversal horizontal 9 solidaire de l'extrémité avant inférieure de l'assise. Cette biellette permet de surélever davantage l'avant de l'assise en position d'utilisation tout en permettant à l'assise de basculer vers l'avant à une distance de l'élément de plancher 6 sensiblement égale à la longueur de la biellette 8.

Sous la position d'utilisation de l'assise 4, un bac de rangement 10 est placé sur le plancher 2, du côté de l'extrémité avant de l'assise. Sur les figures, seules les parois latérales transversales avant 11 et arrière 12 du bac sont représentées. Un couvercle 13 reposant sur les bords des parois latérales ferme le bac de rangement 10. Ce couvercle présente une forme de cuvette, dont la concavité est tournée vers l'intérieur du bac 10 en position fermée. Il est conformé de manière à former, en position fermée, une cuvette anti-sousmarinage lorsque l'assise est dans la position d'utilisation représentée figures 1 et 3. De manière classique, le dessous de l'assise présente une forme en cuvette 4a semblable à la cuvette anti-sousmarinage 13.

La cuvette anti-sousmarinage 13 est montée pivotante sur la paroi transversale avant 11 du bac, autour d'un axe transversal horizontal 14. Cet axe 14 est disposé en arrière et au dessus de l'axe d'articulation 7 de l'assise, à proximité de ce dernier. Cette articulation peut être réalisée au moyen d'une charnière classique. La cuvette peut ainsi être pivotée entre une position d'utilisation dans laquelle elle forme le couvercle du bac et le dispositif anti-sousmarinage (figures 1 et 3), et une position escamotée située en avant de son axe d'articulation dans laquelle l'accès au contenu du bac est possible.

Dans l'exemple, l'élément de plancher 6 supportant la cuvette anti-sousmarinage et l'articulation de l'assise est formé par le bac de rangement 10. A cet effet, la paroi latérale transversale avant 11 du bac est doublée, vers l'avant, d'une paroi transversale verticale 15 dont la partie supérieure 16 est pliée vers l'arrière du véhicule. Le bord de cette partie supérieure 16 est solidaire de la paroi transversale avant 11 du bac. L'axe d'articulation 7 de l'assise est de préférence solidaire de l'élément de plancher 6 au niveau de la ligne de pliage entre les parties 15 et 16, de manière à être situé le plus en avant possible de l'élément de plancher. Le bord de cette partie supérieure 16, relié à la paroi transversale 11 du bac de rangement, est solidaire de l'axe de rotation 14 de la cuvette anti-sousmarinage. Cet axe 14 est ainsi situé en arrière et au dessus de l'axe 7, la partie supérieure 16 formant un plan incliné tel que visible sur les figures.

Cette inclinaison permet à la cuvette anti-sousmarinage 13 de basculer plus loin vers l'avant en position escamotée, tel que représenté sur les figures 2 et 4. En position escamotée, la paroi transversale 13a de la cuvette adjacente à l'articulation repose sensiblement contre la partie d'extrémité 16. Dans l'exemple, la biellette 8 est reliée à l'assise de manière à s'étendre essentiellement sensiblement parallèlement à la paroi 13a de la cuvette en position escamotée. La biellette 8 est alors de préférence suffisamment longue afin que l'assise en position escamotée ne gêne pas le basculement de la cuvette jusque dans sa position escamotée.

Dans cet exemple, le plancher 2 du véhicule présente plusieurs niveaux. Un premier niveau 2a correspond au plancher devant le siège arrière 1, un deuxième niveau 2b légèrement plus haut est situé sous la position d'utilisation de l'assise et un troisième niveau 2c encore plus haut s'étend derrière le siège arrière. Le bac de rangement 10 est monté sur le deuxième niveau 2b. Un baquet 17 servant de support à l'assise dans sa position d'utilisation (figures 1 et 3) relie la partie supérieure de la paroi transversale arrière 12 du bac au troisième niveau de plancher 2c.

Ainsi, dans les positions d'utilisation de l'assise 4 et de la cuvette anti-sousmarinage 13 représentées figures 1 et 3, la cuvette ferme le bac de rangement 10 et assure sa fonction d'anti-sousmarinage. Lorsque l'assise 4 est pivotée vers l'avant, par exemple contre le dossier d'un siège avant non représenté, la cuvette 13 est alors accessible et peut être pivotée pour permettre l'accès au contenu du bac de rangement. Dans cette position escamotée de la cuvette, le dossier 3 peut être basculé vers l'avant en direction du plancher. Il peut alors pivoter jusqu'à venir en contact avec la partie la plus haute de l'élément de plancher 6, à savoir le bord supérieur de la paroi transversale 11 sur lequel est fixé l'axe d'articulation 14 de la cuvette. La hauteur de cette paroi est alors de préférence choisie de manière à ce que le dos du dossier s'étende sensiblement horizontalement, et, de préférence, dans le prolongement de la partie de plancher 2c (figure 2).

On peut également prévoir des moyens de verrouillage (non représentés) sur le bord du bac de rangement afin de maintenir la cuvette d'anti-sousmarinage en position fermée sur le bac de rangement.

Bien entendu, l'élément de plancher sur lequel repose, et est articulée, la cuvette anti-sousmarinage, peut être formé par le plancher du véhicule, ou être formé des parois d'un bac de rangement ou d'un ou plusieurs supports indépendants spécialement prévus à cet effet.

## Revendications

1. Siège arrière de véhicule automobile (1) pourvu d'un dossier articulé (3), d'une assise (4) dont l'extrémité avant est montée pivotante autour d'un axe d'articulation transversal (7) sur un élément de plancher (6) du véhicule de manière à pivoter vers l'avant entre une position d'utilisation et une position escamotée sensiblement verticale, et d'une cuvette anti-sousmarinage (13) supportée par l'élément de plancher (6), **caractérisé en ce qu'**un bord transversal de la cuvette anti-sousmarinage est monté pivotant sur l'élément de plancher autour d'un axe d'articulation transversal (14) situé à proximité et en arrière de l'axe d'articulation (7) de l'assise, de manière à permettre le pivotement de la cuvette vers l'avant lorsque l'assise est en position escamotée, entre une position d'utilisation renversée située sous la position d'utilisation de l'assise, et une position escamotée dans laquelle la surface du plancher située sous la position d'utilisation de l'assise est suffisamment dégagée pour permettre au dossier du siège de reposer sur l'élément de plancher sensiblement horizontalement.

2. Siège arrière selon la revendication 1, **caractérisé en ce que** l'axe d'articulation de la cuvette (14) pivote indépendamment de l'axe d'articulation de l'assise (7).

3. Siège arrière selon la revendication 1 ou 2, **caractérisé en ce que** l'axe d'articulation de l'assise (7) est situé en avant et en dessous de l'axe d'articulation (14) de la cuvette anti-sousmarinage.

4. Siège arrière selon l'une des revendications 1 à 3, **caractérisé en ce que** l'assise (4) est articulée à l'élément de plancher (6) au moyen d'au moins une biellette (8) dont une extrémité est articulée à l'élément de plancher et l'autre extrémité est articulée à l'assise, la longueur de la biellette étant suffisante pour que la cuvette puisse pivoter jusqu'à sa position escamotée sans être gênée par l'assise escamotée.

5. Siège arrière selon la revendication 4, **caractérisé en ce que** la biellette (8) est montée de manière à s'étendre sensiblement parallèlement à la paroi (13a) de la cuvette reliée à l'élément de plancher, dans les positions escamotées de l'assise et de la cuvette.

6. Siège selon l'une des revendications 1 à 5, **caractérisé en ce que** le bord de la cuvette est conformé de manière à s'adapter, dans la position d'utilisation, sur les bords d'un bac de rangement (10) disposé sous l'assise du siège en position d'utilisation et formant l'élément de plancher.

7. Véhicule automobile pourvu d'un siège selon l'une des revendications précédentes, dans lequel, dans une position pivotée du dossier, le dos du dossier s'étend sensiblement horizontalement dans le prolongement de la partie de plancher (2c) du véhicule située derrière ledit siège, le dossier (3) reposant au moins partiellement sur l'élément de plancher.

8. Véhicule automobile selon la revendication 7, **caractérisé en ce que** l'élément de plancher (6) est formé d'un bac de rangement (10) situé sous la position d'utilisation de l'assise.

9. Véhicule automobile selon l'une des revendications 7 ou 8 dépendant de la revendication 6, **caractérisé en ce que** la cuvette anti-sousmarinage (13) est articulée sur un bord transversal avant (11) dudit bac de manière à former, dans sa position d'utilisation, un couvercle pour celui-ci.

10. Véhicule selon la revendication 9, **caractérisé en ce que** le bac de rangement (10) est pourvu de moyens de verrouillage de la cuvette anti-sousmarinage dans sa position d'utilisation.

## Claims

1. Motor vehicle rear seat (1) provided with an articulated back rest (3), with a seat cushion (4) the front end of which is mounted to pivot about a transverse pivot axle (7) on a floor element (6) of the vehicle so as to pivot forward between a position of use and a substantially vertical folded-away position, and with an anti-submarining hump (13) supported by the floor element (6), **characterized in that** one transverse edge of the anti-submarining hump is mounted to pivot on the floor element about a transverse pivot axle (14) located near to and to the rear of the pivot axle (7) about which the seat cushion pivots, so as to allow the hump to be pivoted forward when the seat cushion is in its folded-away position, between a folded-down position of use situated under the position of use of the seat cushion, and a folded-away position in which the floor surface situated under the position of use of the seat cushion is clear enough to allow the seat back rest to rest substantially horizontally on the floor element.

2. Rear seat according to Claim 1, **characterized in that** the pivot axle for the hump (14) pivots independently of the pivot axle for the seat cushion (7).

3. Rear seat according to Claim 1 or 2, **characterized in that** the pivot axle for the seat cushion (7) is situated forward of and below the pivot axle (14) for the anti-submarining hump.

4. Rear seat according to one of Claims 1 to 3, **characterized in that** the seat cushion (4) is articulated to the floor element (6) by means of at least one link rod (8) one end of which is articulated to the floor element and the other end of which is articulated to the seat cushion, the length of the link rod being enough that the hump can pivot into its folded-away position without being impeded by the folded-away seat cushion.

5. Rear seat according to Claim 4, **characterized in that** the link rod (8) is mounted in such a way as to run substantially parallel to the wall (13a) of the hump connected to the floor element, when the seat cushion and the hump are in their folded-away positions.

6. Seat according to one of Claims 1 to 5, **characterized in that** the edge of the hump is shaped in such a way that, in the position of use, it fits over the edges of a storage compartment (10) located under the seat cushion of the seat in the position of use and that forms the floor element.

7. Motor vehicle provided with a seat according to one of the preceding claims, in which, when the back rest is in a pivoted position, the back of the back rest runs substantially horizontally in the continuation of that part of the floor (2c) of the vehicle that lies behind the said seat, the back rest (3) resting at least partially on the floor element.

8. Motor vehicle according to Claim 7, **characterized in that** the floor element (6) is formed of a storage compartment (10) situated under the position of use of the seat cushion.

9. Motor vehicle according to one of Claims 7 and 8, dependent on Claim 6, **characterized in that** the anti-submarining hump (13) is articulated to a front transverse edge (11) of the said compartment in order, in its position of use, to form a lid for said compartment.

10. Vehicle according to Claim 9, **characterized in that** the storage compartment (10) is provided with means for locking the anti-submarining hump in its position of use.

## Patentansprüche

1. Kraftfahrzeugrücksitz (1), der versehen ist mit einer schwenkbaren Rückenlehne (3), einer Sitzfläche (4), wovon ein vorderes Ende an einem Bodenelement (6) des Fahrzeugs schwenkbar um eine transversale Schwenkachse (7) so angebracht ist, dass sie zwischen einer Verwendungsposition und einer im Wesentlichen vertikalen hochgeklappten Position nach vorn schwenken kann, und mit einer Durchtauchschutzwanne (13), die durch das Bodenelement (6) unterstützt ist, **dadurch gekennzeichnet, dass** ein transversaler Rand der Durchtauchschutzwanne an dem Bodenelement schwenkbar um eine transversale Schwenkachse (14), die sich in der Nähe und hinter der Schwenkachse (7) der Sitzfläche befindet, angebracht ist, derart, dass dann, wenn sich die Sitzfläche in der hochgeklappten Position befindet, das Schwenken der Wanne nach vorn zwischen einer umgedrehten Verwendungsposition, die sich unter der Sitzflächenverwendungsposition befindet, und einer hochgeklappten Position, in der die Oberfläche des Bodens, die sich unter der Sitzflächenverwendungsposition befindet, ausreichend freigelegt ist, ermöglicht wird, um der Rückenlehne des Sitzes zu ermöglichen, auf dem Bodenelement im Wesentlichen horizontal zu liegen.

2. Rücksitz nach Anspruch 1, **dadurch gekennzeichnet, dass** die Schwenkachse der Wanne (14) unabhängig von der Schwenkachse der Sitzfläche (7) schwenkt.

3. Rücksitz nach Anspruch 1 oder 2, **dadurch gekennzeichnet, dass** sich die Sitzflächen-Schwenkachse (7) vor und unter der Schwenkachse (14) der Durchtauchschutzwanne befindet.

4. Rücksitz nach einem der Ansprüche 1 bis 3, **dadurch gekennzeichnet, dass** die Sitzfläche (4) an dem Bodenelement (6) mittels wenigstens eines Schwingarms (8) angelenkt ist, wovon ein Ende an dem Bodenelement angelenkt ist und das andere Ende an der Sitzfläche angelenkt ist, wobei die Länge des Schwingarms ausreicht, damit die Wanne bis in die hochgeklappte Position schwenken kann, ohne durch die hochgeklappte Sitzfläche behindert zu werden.

5. Rücksitz nach Anspruch 4, **dadurch gekennzeichnet, dass** der Schwingarm (8) so angebracht ist, dass er sich in den hochgeklappten Positionen der Sitzfläche und der Wanne im Wesentlichen parallel zur Wand (13a) der Wanne, die mit dem Bodenelement verbunden ist, erstreckt.

6. Sitz nach einem der Ansprüche 1 bis 5, **dadurch gekennzeichnet, dass** der Rand der Wanne so ausgebildet ist, dass er sich in der Verwendungsposition an die Ränder eines Aufbewahrungskastens (10) anschmiegt, der sich unter der Sitzfläche des Sitzes in der Verwendungsposition befindet und das Bodenelement bildet.

7. Kraftfahrzeug, das mit einem Sitz nach einem der vorhergehenden Ansprüche versehen ist, wobei sich in einer geschwenkten Position der Rückenlehne die Rückseite der Rückenlehne im Wesentlichen horizontal in der Verlängerung des Bodenteils (2c) des Fahrzeugs, das sich hinter dem Sitz befindet, erstreckt, wobei die Rückenlehne (3) wenigstens teilweise auf dem Bodenelement aufliegt.

8. Kraftfahrzeug nach Anspruch 7, **dadurch gekennzeichnet, dass** das Bodenelement (6) aus einem Aufbewahrungskasten (10) gebildet ist, der sich unter der Verwendungsposition der Sitzfläche befindet.

9. Kraftfahrzeug nach einem der Ansprüche 7 oder 8, wenn abhängig von Anspruch 6, **dadurch gekennzeichnet, dass** die Durchtauchschutzwanne (13) an einem vorderen transversalen Rand (11) des Kastens angelenkt ist, derart, dass sie in ihrer Verwendungsposition für ihn einen Deckel bildet.

10. Fahrzeug nach Anspruch 9, **dadurch gekennzeichnet, dass** der Aufbewahrungskasten (10) mit Mitteln zum Verriegeln der Durchtauchschutzwanne in ihrer Verwendungsposition versehen ist.
